# EUROPEAN PATENT APPLICATION

(11) **EP 4 815 621 A1**
(43) Date of publication of application: **30.09.2026**
(21) Application number: 25167162.4
(22) Date of filing: 28.03.2025
(51) Int. Cl.: H04W 88/08, G01S 5/02, H04L 27/20, H04W 64/00

(54) **ENHANCED FRONTHAUL COMMUNICATION TECHNIQUES**

(71) Applicant: Siemens Aktiengesellschaft, 80333 München (DE)
(72) Inventor: Fu, Yiyao, 40670 Meerbusch (DE); Kammerlander, Ralph, 76751 Jockgrim (DE)
(74) Representative: Siemens Patent Attorneys

(57) **Abstract**

A method of packet processing by a fronthaul node, such as a switch, bride, gateway and/or radio aggregation unit, comprising the steps of: forking, by the fronthaul node, IQ data representing one or more RF signals, e.g., one or more SRS symbols, from a plurality of ingress IQ data streams received at the fronthaul node.

## Description

### TECHNICAL FIELD

The present disclosure relates to the field of radio communication systems, and in particular to the fronthaul network. The disclosure further relates to the positioning of terminal devices such as UEs, in particular in industrial environments.

*Independent of the grammatical term usage, individuals with male, female or other gender identities are included within the term.*

### BACKGROUND

In radio communication systems the traditionally monolithic base transceiver station, BTS, architecture is nowadays replaced by a distributed BTS architecture in which the functions of the BTS are separated into two or more physically separate units, such as a central unit, CU, a distributed, DU, and a radio unit, RU. The CU/DU performs processing for the particular air interface that is being used to wirelessly communicate over one or more radio frequency channels. The radio unit, RU, performs radio frequency processing to convert data output from the CU/DU to radio frequency signals for radiating from one or more antennas coupled to the radio unit and/or to produce data for the CU/DU from radio frequency signals that are received at the radio unit via one or more antennas. The radio unit may be installed near the one or more antennas, e.g., at the top of a tower, and the CU/DU may be installed in a more accessible location, e.g., at the bottom of the tower. However, as the case may be, radio unit and CU/DU may be collocated, e.g., in a lab. The CU/DU and the radio unit may be connected through one or more fiber optic links. The interface between the CU/DU and the radio unit is defined by fronthaul communication link standards such as the Common Public Radio Interface, CPRI, family of specifications, the Open Base Station Architecture Initiative, OBSAI, family of specifications, and the Open Radio Interface, ORI, family of specifications.

In the 5G architecture, a frequency domain fronthaul interface is specified. The frequency domain fronthaul is a functional split where the IFFT/FFT, Inverse Fast Fourier Transform/Fast Fourier Transform, may be moved from the CU/DU to the radio unit. Frequency domain samples instead of time domain samples are sent over the fronthaul. The radio unit will have information through a communication channel about the resource allocation for different UEs. To that end, the enhanced CPRI, eCPRI, interface specification "eCPRI Specification V1.0 (2017 Aug. 22)" is already available.

For the deployment scenario where the radio unit and the CU/DU (sometimes also denoted as radio equipment controller, REC) are separated, the signals received from one or more antennas have to be transported over the media that is connecting the radio unit with the CU/DU as normally the signal combination is done at the CU/DU. The interface that is used for the connection between the CU/DU and the radio unit is called the fronthaul. The signals over the fronthaul may be complex time domain samples such as specified in the legacy Common Public Radio Interface, CPRI, or may be in the frequency domain, such as specified by the eCPRI protocol. Digitized waveforms may be transported over the fronthaul from the CU/DU to the radio unit, and vice versa, via one or more radio aggregation units, RAU.

### SUMMARY

Distributed radio units, RUs, are widely used for small or femto cells or private 5G networks. Thereby the coverage of a cell is increased by introducing multiple RUs over different places, simplifying the network deployment work, minimizing the inter-cell-interference, ICI, and avoiding unnecessary switching between different cells, e.g., handover between cells. From a gNB's perspective, the signals received from different RUs cannot be differentiated, because all IQ samples may be combined in a fronthaul node, e.g. such as a fronthaul gateway.

It is thus an object to enable distinguishing between different RUs and their respective IQ data, for example even when a fronthaul node, such as a gateway, that combines the IQ data of multiple RUs is used in the fronthaul between the RUs and the DU.

According to a first aspect, a method of packet processing by a fronthaul node, such as a switch, bride, gateway and/or radio aggregation unit, is proposed. The method comprising the step of forking, by the fronthaul node, IQ data representing one or more RF signals, e.g., one or more SRS symbols, from a plurality of ingress IQ data streams received at the fronthaul node.

According to a second aspect a fronthaul node operative to perform the method steps of any one the first aspect is proposed.

According to a third aspect, a distributed unit operative to process the first egress IQ data stream according to the first aspect is proposed, and in particular operative to perform a delay calculation and/or forward a result of a delay calculation to an application layer application, e.g., for positioning of a UE, based on the forked IQ data representing one or more RF signals, e.g., one or more SRS symbols, in the first egress IQ data stream.

According to a fourth aspect a system comprising a plurality of radio units, a distributed unit according to the third aspect, a fronthaul node according to the second aspect arranged between the distributed unit and the plurality of radio units is proposed.

### BRIEF DECSRIPTION OF THE DRAWINGS

Figure 1 shows a DU that is communicatively coupled to the one or more RUs via a fronthaul (network).
Figure 2 shows a fronthaul node, FH, acting as an aggregation and/or signal-processing point between multiple Radio Units, RUs, and the Distributed Unit, DU.
Figure 3 shows an eCPRI protocol stack.
Figure 4 shows an Ethernet packet with eCPRI payload.
Figure 5 illustrates IQ data.
Figure 6 illustrates a fronthaul node comprising a digital signal processor, e.g., implemented in hardware such as an ASIC or FPGA, that accumulates and/or combines the IQ data.
Figure 7 illustrates a fronthaul node with additional digital signal processing, DSP, capabilities for forking and/or filtering the IQ data received by the fronthaul node.
Figure 8 to 13 show exemplary steps of the techniques proposed herein.

### DETAILED DESRIPTION

In a centralized RAN, i.e. C-RAN, architecture a (single) DU is centralized and connected to multiple RUs, reducing hardware at cell sites. Hence, one DU serves multiple RUs over the fronthaul network. The RUs handle radio transmission, i.e. transmission and/or reception of RF signals, while the DU processes baseband functions centrally. A gNodeB or gNb (Next Generation Node B) or in general a base station may comprise the CU and DU (functionalities). In such a split gNB, i.e. (5G) base station, the DU manages multiple RUs, and both connect to a Central Unit, CU.

In such a C-RAN architecture, the In-phase and Quadrature data, i.e. IQ data, from multiple RUs is combined at the Distributed Unit DU, e.g., using techniques designed to handle multiple antenna signals efficiently. The combination process depends on the functional split used and the coordination required between the RUs. For exemplary purposes it is assumed that the RUs all make use of the same functional split. For example, if Split 8 (PHY-RF Split) is used, the DU sends raw IQ samples to the RU and each RU transmits independently. According to Split 7.2x (High-PHY/Low-PHY Split) the DU combines multiple RU signals before they are modulated and transmitted. Split 7.2x is the most common for Open RAN, where the DU performs Low-PHY processing before sending to RUs. And according to Split 6 (MAC-PHY Split) the DU has more control over combining signals before PHY-layer processing.

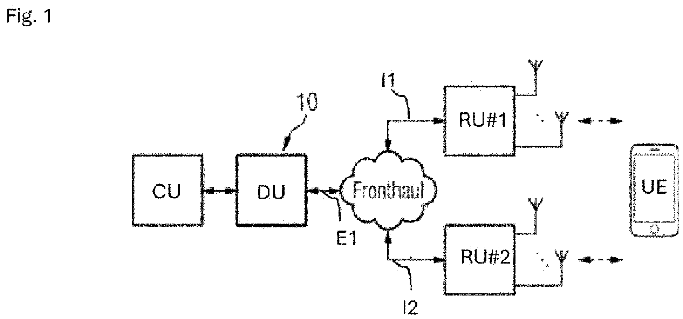

Furthermore, different mechanisms exist to ensure timing of the RF signal transmission over the air. In Coordinated Multipoint, CoMP, multiple RUs transmit the same data, and the DU ensures phase and timing alignment. The received IQ data on the other hand are combined at the DU to improve signal quality and reduce interference. The DU combines IQ data using beamforming, CoMP, or diversity techniques, depending on the deployment. As shown in Figure 1, the DU is communicatively coupled to the one or more RUs via a fronthaul (network).

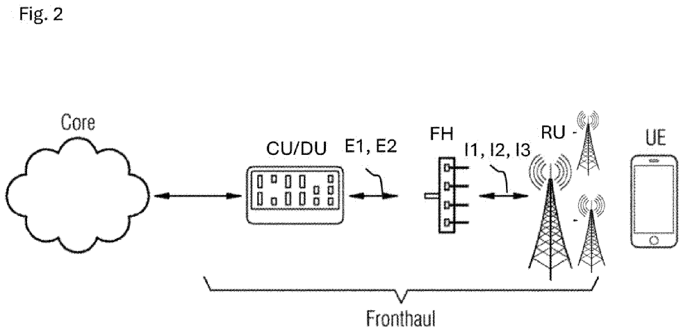

Turning to Figure 2 a fronthaul node FH may acts as an aggregation and/or signal-processing point between multiple Radio Units, RUs, and the Distributed Unit, DU. The fronthaul node is located in the fronthaul (network) between the DU and the respective RUs. The fronthaul node FH may aggregate IQ data streams I1, I2, I3 from multiple RUs. The fronthaul node may also perform pre-processing functions, e.g., signal combination, synchronization, or compression (instead or in addition to the DU). By deploying such a fronthaul node FH in the fronthaul network the fronthaul bandwidth requirements may be optimized, while still allowing for an increased coverage. The fronthaul node FH may collect IQ data from multiple RUs over respective fronthaul links, e.g., implementing the eCPRI protocol. This reduces the number of direct fronthaul links to the DU, and thus improves scalability.

If multiple RUs transmit the same signal, e.g., in a Single Frequency Network (SFN) setup, the fronthaul node FH can sum the IQ samples, e.g. in the form of IQ data, coherently. Thereby ensuring proper phase and/or time alignment before passing the combined signal to the DU.

In massive MIMO or coordinated deployments, the fronthaul node FH can apply beamforming weights before sending the IQ data to the DU. This reduces the DU's processing load, making the network more efficient. Hence a fronthaul node may perform (eCPRI) multiplexing, IQ summation, beamforming pre-processing, and/or compression to optimize the fronthaul network.

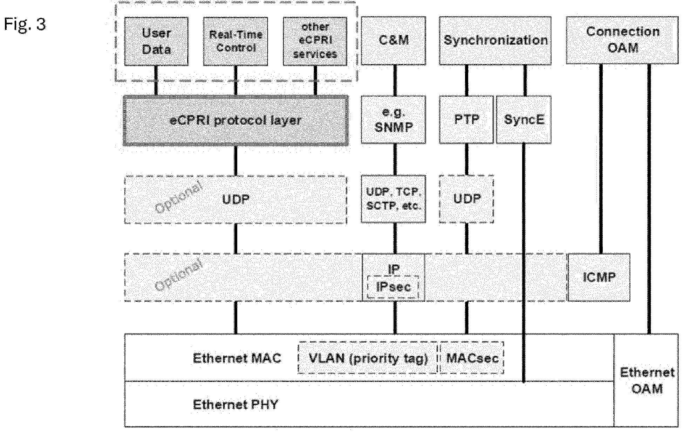

Figure 3 shows an eCPRI protocol stack. As mentioned, a communication between the fronthaul node and the multiple RUs may be performed over respective fronthaul links, each of which for example implement the eCPRI protocol. On the other side the fronthaul node may communicate with the DU over a single fronthaul link, exemplarily also implementing the eCPRI protocol. Theoretically eCPRI can be embedded into various types of transport (PHY/MAC) media, but nowadays ethernet is the most common transport protocol for eCPRI. In this structure, eCPRI packets are embedded into the payload part of an ethernet frame. Thus, to transport eCPRI packets in an Ethernet network, the eCPRI packet will be encapsulated in an Ethernet packet. The eCPRI protocol specification only defines the layer 2 function that carries the user defined payload data, such as the IQ data stream. However, both control and management, and synchronization are out of the eCPRI protocol scope. Instead of using Time Division Multiplexing, TDM, according to CPRI, eCPRI makes use of Frequency division multiplexing, FDM, in which the IQ data is in the frequency domain and is transported over the Ethernet protocol which is packet-based.

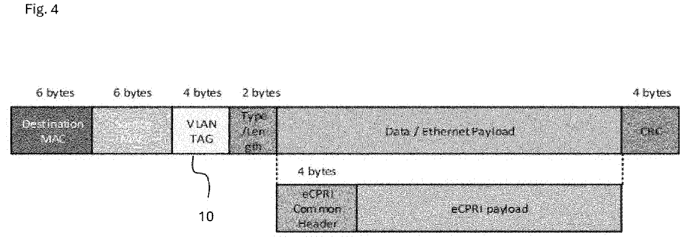

Figure 4 shows an Ethernet packet with eCPRI payload. An Ethernet frame, also referred to as packet, is a data link layer protocol data unit and uses the underlying Ethernet physical layer transport mechanisms. In other words, a data unit on an Ethernet link transports an Ethernet frame as its payload. An Ethernet frame is preceded by a preamble and start frame delimiter (SFD), which are both part of the Ethernet packet at the physical layer. Each Ethernet frame starts with an Ethernet header, which contains destination and source MAC addresses as its first two fields. The middle section of the frame is payload data including any headers for other protocols (for example, Internet Protocol and/or eCPRI) carried in the frame. The frame ends with a frame check sequence (FCS), which is a 32-bit cyclic redundancy check used to detect any in-transit corruption of data. As described, the Ethernet frame comprises an eCPRI packet as its payload. In turn, the eCPRI packet also comprises a header and a payload. The payload of the eCPRI packet may comprise the IQ data sampled by the one or more RUs, or as the case may be IQ data to be transmitted as RF signals over the air by the one or more RUs. The eCPRi header is not reiterated here since it is commonly known. Therein message type 0 of the eCPRI protocol indicates IQ data in the payload of the eCPRI packet.

Now, the IQ data may be transmitted in the form of a stream, i.e. an IQ data stream. That is, a stream may represent a plurality of, or multiple Ethernet frames which are grouped by similar frame attributes, such as for example a MAC source address and/or a MAC destination address. Hence, the IQ data may be comprised in a plurality of Ethernet frames. A stream data producer represents an (end) node in an (Ethernet) network, such as the fronthaul, which produces (continously) data. The data is transmitted via a stream and received by one or multiple end nodes, i.e. the stream data consumers. Hence, a stream data consumer represents an end node in an Ethernet network which consumes (continously) data. The IQ data may thus be received via a stream. As the case may be each RU transmits an IQ data stream to the fronthaul node, and/or vice versa, i.e. the fronthaul node transmits an IQ data stream to each of the RUs. As shown, the (IQ) data packet and thus the IQ data (packet) stream may comprise a VLAN tag. It is, inter alia, proposed herein to make use of such an identifier, e.g. said VLAN tag 10, to identify IQ data of a specific type. Hence, the identifier may be used to identify an (IQ) data stream carrying specific information, such as a predetermined type of RF symbols or any other type or part of the RF signal (received by said one or more, e.g. said plurality, of RUs).

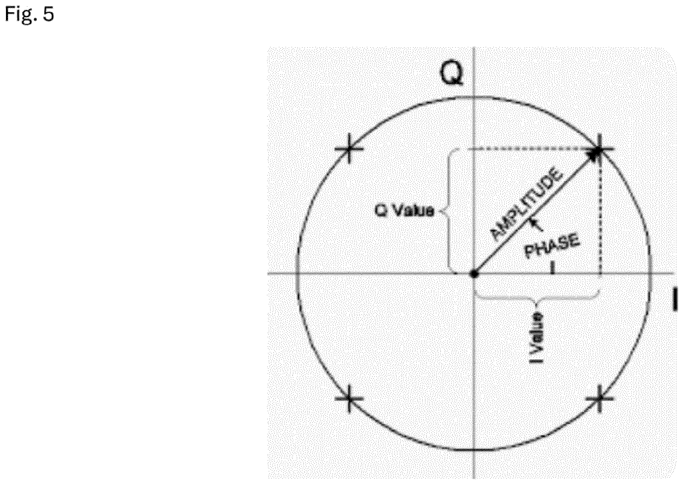

Figure 5 shows an illustration of IQ data. IQ data is a signal representation, and more particularly as in the present case of an RF signal. IQ data is the rectangular representation of the polar notation of an RF signal. IQ data consists of or comprises I and Q values represented as two separate variables, a vector of length two, or more often, the complex number I + Qi. In the literature IQ values and thus the IQ data is treated as a complex number with the I and Q components corresponding to the real and imaginary parts, or as distinct pairs of values, as e.g., a 2D vector, or as separate streams altogether. Thus, a stream of information about the amplitude modulation of the I and Q phases of a sine wave is known as the I/Q data. Thus, the IQ data stream may also be understood as information about the amplitude modulation of the I and Q phase of a sine (or cosine) wave, e.g. for the purpose of modulating or demodulating an RF signal. If the IQ data itself has some frequency (e.g. a phasor) then the carrier also can be frequency modulated. I/Q data is a complete representation of how a carrier is modulated in amplitude, phase and frequency. For received signals, e.g., by determining how much in-phase carrier and how much quadrature carrier is present in the signal, it is possible to represent that signal using in-phase and quadrature components, so IQ data may be generated from a signal with reference to a carrier sine wave.

Thus A/D conversion of RF signals, e.g., received as input by the one or more radio units, may be performed to generate a data stream of IQ data. For example, an IQ demodulator block can be used to extract individual or multiple frequency ranges from a complex IQ data stream. Thus, a received RF signal may be down-converted from the carrier frequency of the RF signal to the baseband. The baseband signal may then be sampled and represented as I and Q samples as real and imaginary components. Thus, the I and Q samples may represent the real and imaginary part of the complex baseband signal, which baseband signal in turn corresponds to the real passband signal around the carrier frequency.

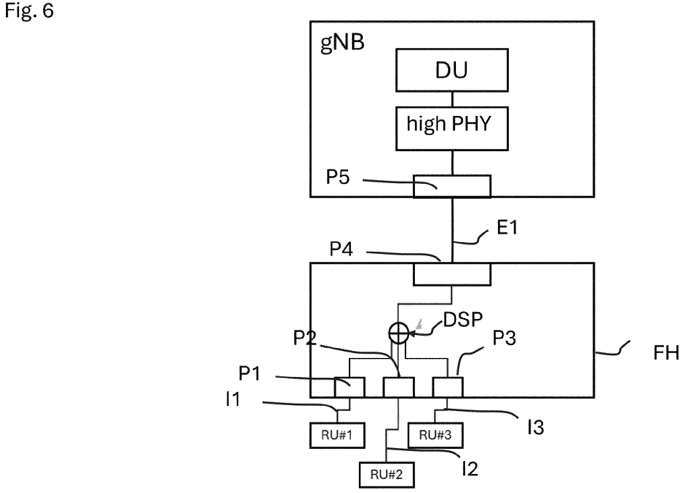

Now returning to the radio equipment and fronthaul network, as for example shown in Figure 6. A distributed radio unit is the technology widely used for small or femto cell or private radio network, such as for example according to a 3GPP specification. Such multiple and/or distributed radio units increase the coverage of a cell by introducing multiple RUs, RU#1, RU#2, RU#3, e.g., over different places, for example for simplifying the network deployment work, minimizing the inter cell interference and avoiding unnecessary switching between different cells, e.g., as necessary during a handover between cells. For example, from a gNB perspective, the signals received from different RUs, RU#1, RU#2, RU#3, cannot be differentiated, because all IQ data, also referred to as IQ samples, are combined in the fronthaul node FH as described herein. As shown in Figure 6 the fronthaul node FH may comprise a digital signal processor, DSP, e.g., implemented in hardware such as an ASIC or FPGA, that accumulates and/or combines the IQ data from the plurality of radio units RUs, RU#1, RU#2, RU#3, as described herein. That is, the IQ data from the different IQ data streams I1, I2, I3 is combined and output as a single IQ data steam E1. For example, an RF signal may be received by each one of the plurality of radio units, for example from a (single) UE. Then, each radio unit samples the RF signal and provides a digitized representation of the RF signal in the form of IQ data as an output. Each radio unit transmits its IQ data via a separate IQ data stream I1, I2, I3 to the fronthaul node. The fronthaul node FH combines the IQ data received via said separate ingress IQ data streams as just discussed. Thus, a number of IQ data received from the plurality of RUs is combined into a single IQ data pair of I and Q values. This combined IQ data is then transmitted, again via the fronthaul, as an egress IQ data stream E1 (from the fronthaul node) to the DU, e.g. for further processing, e.g. in accordance with the functional split present between the RUs and the DU.

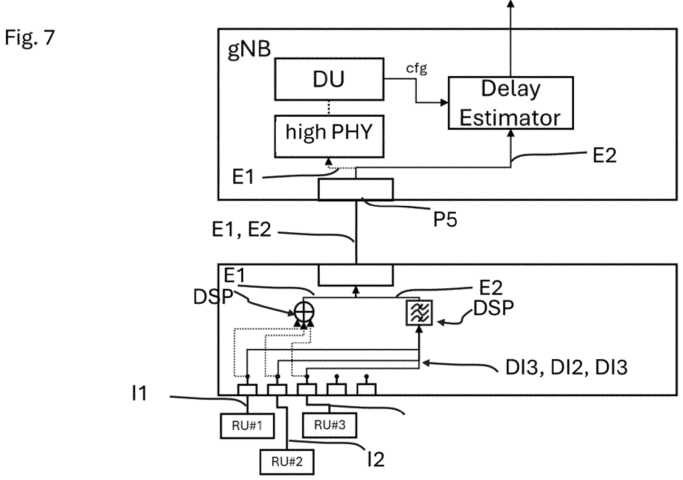

Now turning to Figure 7, it is proposed to add an additional digital signal processing, DSP, component to the fronthaul node, e.g. implemented on the same substrate, i.e. the same AISC or FPGA. This DSP component may serve for forking and/or filtering the IQ data received by the fronthaul node FH. More specifically, the DSP component filters one or more predetermined OFMD symbols represented by the IQ data. To achieve this, the IQ data stream I1, I2, I3 from each individual RU RU#1, RU#2, RU#3 may be duplicated. One stream goes to the DSP combiner, e.g., as described in relation to Figure 6. The other (new) data stream goes to the filter. The filter will then only forward the pre-configured symbols to the network interface of the fronthaul node. As the case may be the same can be achieved without the complete duplication of the one or more ingress data stream I1, I2, I3, but by only copying or duplicating the one or more predetermined RF symbols - or any other part of the RF signal. In order to make these filtered symbols and/or thus the egress IQ data stream E2 (of the forked IQ data) easily detectable in the gNB, e.g., by the DU and/or CU, an identifier, such as VLAN tag, e.g., different to the O-RAN CUS-plane (Control/User/Synchronization), and preferably different to (the identifier, preferably another VLAN tag, of) the other IQ data stream comprising the combined IQ data, may be used. Hence, different egress IQ data streams E1, E2 may make use of different identifier, such as said VLAN tags, i.e. make use of different VLAN tags. Instead of forking the term replicating may be used. i.e. referring to the fact, that forking of the IQ data (packets) refers to the process where the fronthaul node creates exact copies, i.e. replicas, of the IQ data, e.g., an IQ data packet, and/or processes them differently, e.g., for transmission via different egress IQ data streams.

Compared with the original IQ data stream E1 from the fronthaul node FH to the DU, the major difference is that the filtered IQ data stream preserves all the unmodified IQ samples from each RU. Hence, a selection can be made which IQ data corresponding to one or more RF signals, e.g. in the form of one or more OFDM(A) signals shall be preserved and transmitted to the DU, and as a case may be, to an application for processing the one or more IQ data from the plurality of RUs in an uncombined manner. As described herein the forked (and thus uncombined) IQ data can be transmitted to the DU in a separate IQ data stream, e.g., using a stream of ethernet frames, which for example are identified by an identifier, such as a VLAN tag. Such forking, duplicating and/or filtering may serve for preserving (only) the OFDM(A) symbols specified and predetermined. For example, as described herein, only OFDM symbols containing SRS symbols, e.g. as received by the respective RU from the plurality of RUs, may be preserved.

At the DU the forked IQ data is received and/or forwarded for further (DSP) processing. For example, the forked IQ data (stream) E2 may be processed differently than the combined IQ data (stream) E1. As e.g. shown in Figure 7 the IQ data of the first IQ data stream E1 may be processed in accordance with the functional split, for example by high PHY, i.e. physical, layer processing. Furthermore, the forked IQ data of the IQ data stream E2 may be forwarded within the DU to a delay estimator.

Returning to the fronthaul node FH, for example in case the IQ data represent one or more SRS symbols, this IQ data is forked by the fronthaul node FH. The forked IQ data (stream) E2 is then forwarded to a delay estimator at the DU, or gNb, as the case may be. SRS stands for Sounding Reference Signal and is a reference signal transmitted by the UE in the uplink direction which is used by the gNodeB, and specifically the DU, to estimate the uplink channel quality, for example for one or more frequency ranges. SRS is transmitted as the last symbol(s) of an UL slot and/or it is transmitted in a certain interval. Each UE can be configured to transmit SRS in hopping mode with different hopping schedule(s) effectively avoiding SRS symbol collision. The SRS symbol is a predefined signal with known characteristics, and is transmitted, e.g., at a specific time and frequency, by a UE.

The DU may then estimate the channel state information, CSI, by comparing the received SRS symbol with one or more known reference signals. The DU then determines various parameters, such as the path loss, propagation delay(phase delay), and received signal strength, in order for the current radio environment and/or channel conditions between the RU and the UE to be determined. Once the DU has estimated the channel state based on the SRS symbol, it may use this information to optimize its resource allocation and/or scheduling decisions. This may involve adjusting transmission parameters (such as modulation and/or coding schemes) or selecting the most appropriate MIMO settings to enhance the overall system capacity and/or improve the QoS. By leveraging the SRS, the DU can adapt to the dynamic nature of the radio environment and provide more efficient and reliable communication services. It is also possible to use SRS symbols for positioning of a UE. For example, from international patent publication WO2020163597 techniques for using sounding reference signal (SRS) for positioning have become known.

Hence, once the forked IQ sample(s) are received by a delay estimator, the IQ sample(s) still possess information about the RU they were sampled at, for example by way of a BandSector identifier, ID, or component-carrier identifier, CC_ID. From this information, the delay estimator can calculate the delay for each RU (based on the respective and/or uncombined SRS symbol) with corresponding Radio Network Temporary Identifier, RNTI (which may be configured by the DU). A delay estimator can be used at the DU which for example is already implemented by and/or within a channel estimator. The information determined by the DU may then be transmitted to an Operation And Management, OAM, application in a core network or a data network. For example, Siemens proffers a real-time locating system, RTLS, that for example may be hosted in a data network connected to the CU/DU. By comparing the calculated reference signal timing difference, RSTD, such higher layer application can estimate the UE's position, in a so called multilateration procedure.

In particular, when comparing a single cell or a multi-cell with UL TDoA, uplink time difference of arrival of SRS several advantages are achieved. For example, a UE positioning within one cell is enabled. Also, inter cell interference, ICI, can be avoided and thus multiple RUs can be deployed to achieve an even more precise and accurate positioning. Furthermore, the interoperability with the current fronthaul protocols can be maintained, e.g., with O-RAN CUS plane specification, since the embodiments proposed herein may be regarded as purely additional enhancement. Furthermore, a flexible deployment is achieved, which does not rely on the computing resources of a gNB server, but rather processing may now be off-loaded to a device (or even edge device), e.g. requiring less power.

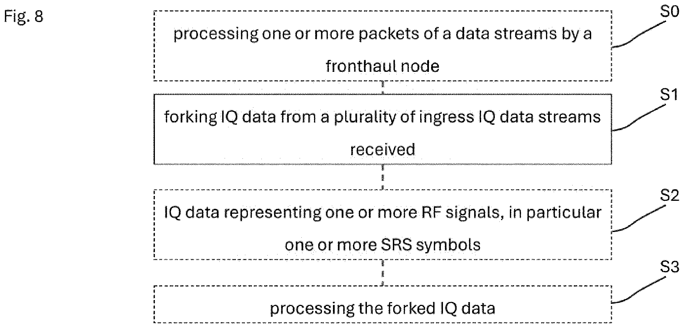

Exemplary method steps are illustrated in the Figures 8 to 13. In a step S0 one or more (IQ) data packets of an IQ data stream may be processed by a fronthaul node. Such processing may comprise receiving, decoding, and/or inspecting the data comprised in the (IQ) data stream. As described herein the data may be IQ data and the data stream may be an IQ data stream either in the form of Ethernet frames, eCPRI packets and/or a successively sampled RF signal. It should be understood that in case of multiple data streams the preprocessing is performed for one or more, i.e. a subset, or for all of the data streams received at the fronthaul node. A data stream may be provided by a RU, e.g. each one of the plurality of radio units, and in case of multiple data streams from multiple radio units. From the perspective of the fronthaul node such data streams are ingress data streams, i.e. received at the fronthaul node (received by the fronthaul node from the plurality of radio units).

A fronthaul node, such as a gateway, a switch, a bridge, as described herein, and/or radio aggregation unit, is an equipment or network element that connects the radio access network, RAN, components (like antenna(s) and/or RU(s)) to the centralized processing infrastructure, i.e. DU and/or CU. An egress data stream thus represents the data that leaves the fronthaul node.

Hence, the one or more egress data streams from the perspective of a fronthaul node refers to the data flow that is transmitted out of, or from the fronthaul node to one or more other network elements, typically toward the backhaul or further network infrastructure, typically towards a centralized unit, CU, or distributed unit, DU, for example in a 5G or LTE network architecture.

An ingress data stream of a fronthaul node refers to the incoming data entering the fronthaul node from one or more other network components. Now, in case of a plurality of radio unit, a plurality of ingress IQ data streams received at the fronthaul node. That is, an ingress data stream is received from each one of the plurality of radio unit.

As the case may be, a data stream can include IQ data (e.g., in accordance with a one or more lower-layer or functional splits), control signaling, and/or synchronization data. Such a data stream is thus referred to as IQ data stream, e.g., because it comprises IQ data, for example as described herein in the form of a plurality of, or multiple Ethernet frames.

In a step S1 IQ data from the plurality of ingress IQ data streams may be forked by the fronthaul node. Forking of IQ data, frames and/or data packets typically refers to splitting or duplicating one or more data packets in a network or communication system for various purposes. Hence, by forking the data packets, the data packets can be duplicated and/or sent along multiple paths simultaneously. This process may be referred to as (packet) forking or multipath forwarding. One or more packets of an IQ data stream may thus be "forked", e.g., forwarded or duplicated, at some point in the network, preferably at and/or by the fronthaul node. The IQ data packets may then be sent along multiple routes and/or data streams in the fronthaul network or processing paths within the fronthaul node, e.g., to reach the destination, e.g. said DU. This can help ensure that if one path is congested or fails, the other paths will still deliver the data. It is proposed herein to make use of the forking in order to preserve the original information contained in the IQ data received in the ingress data stream(s), e.g., before being combined at the fronthaul node FH. Thus, a fronthaul node (such as a router, gateway or switch) may fork or duplicate packets to process them in multiple and/or different ways. For example, one copy may be forwarded to its intended destination, while another copy might be sent to a monitoring system for logging or analysis. A copy may be made of a data packet arriving at the fronthaul node, and sent to different destinations for different purposes (e.g., positioning, logging, analysis, load balancing). It should be understood that a packet preferably refers to IQ data packet herein. Furthermore, a packet may be part of a data stream, such as an IQ data stream as described herein.

Forking is advantageous for the purpose of redundancy, efficiency, and/or load balancing. In the case of redundancy, forking data packets ensures that there are multiple copies of the data being sent through different routes or networks, increasing the likelihood of successful delivery. For the purpose of efficiency, in networks with multiple possible paths, forking can speed up the process by sending the data over multiple paths at once. In the case of load balancing, distributing packets across different paths or systems can help balance network load, preventing any one route from becoming a bottleneck.

Forking of data packets refers to the process where a data packet is duplicated or split into multiple copies, which are then sent to different destinations or processed in parallel.

Hence in a step S2, the forking may relate to IQ data (contained in the one or more frames, packets and/or streams) wherein the IQ data represents one or more (sampled) RF signals, and more specifically one or more SRS symbols.

Uplink Time Difference of Arrival, UL TDoA, of, e.g., 5G NR Sounding Reference Signal, SRS, is widely used for (horizontal) positioning to facilitate the precise positioning of User Equipment, UE. ToA based positioning demands precise clock synchronization between multiple gNBs(cells), also the other pre-requisite is all gNBs must be running on the same frequency range to receive the SRS sent by UE, but same frequency range means naturally inter-cell interference(ICI) in Downlink (DL) as drawbacks. There is no way to estimate a precise position from single gNB, since the main idea is about TDoA.

Hence, in a step S3 the forked IQ data may be processed, e.g., by the fronthaul node. Such processing may comprise tagging, encapsulating and/or forwarding the forked IQ data.

As mentioned herein the fronthaul node may also perform other functions, e.g., in the form of digital signal processing, DSP, in parallel to the one or more steps described herein, such as for example combining the IQ data of the plurality of data streams in IQ data of a single data stream to be transmitted to the DU.

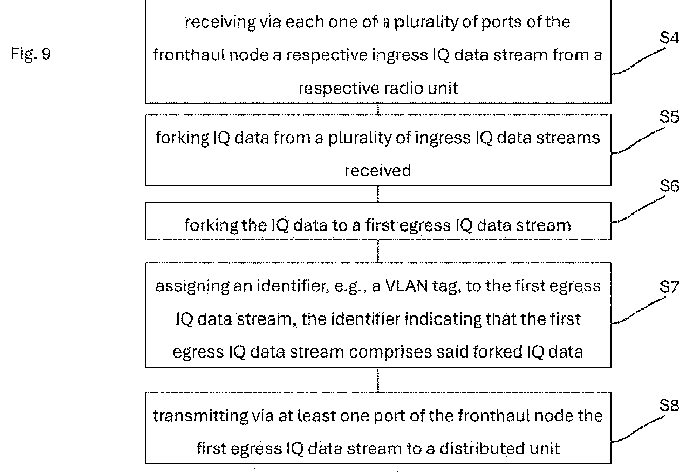

Turning to Figure 9, in a step S4 a respective ingress IQ data stream from a respective radio unit is received via each one of a plurality of ports of the fronthaul node. Such ports serve for connecting the fronthaul node and communicatively coupling the fronthaul node to the respective RU. As before in step S1, now in step S5, the IQ data from a plurality of ingress IQ data streams received may be forked at and by the fronthaul node. In a step S6 the IQ data is forked to a first egress IQ data stream, e.g., to be transmitted to a DU. In a step S7, an identifier, e.g., a VLAN tag, is assigned to the first egress IQ data stream, the identifier indicating that the first egress IQ data stream comprises said forked IQ data. In a step S8, the first egress IQ data stream is transmitted via at least one port of the fronthaul node to a distributed unit. As shown in Figure 6, the fronthaul node may comprise a plurality of ports P1, P2, P3 for receiving the ingress IQ data streams from the respective RUs. The fronthaul node may also comprise a port P4 for transmitting the egress IQ data stream, e.g., to the DU or one or more other fronthaul components. The same port P4 may be used to transmit the second egress IQ data stream comprising the combined IQ data to the DU. The DU may comprise a port P5 for receiving the (first and/or second) egress IQ data stream from the fronthaul node.

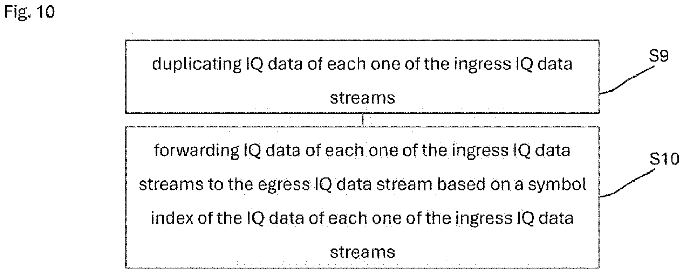

Turning to Figure 10, in a step S9, the IQ data of each one of the ingress IQ data streams may be duplicated or copied by the fronthaul node. Additionally and/or alternatively, in a step S10, the IQ data of each one of the ingress IQ data streams may be forwarded to the egress IQ data stream based on a symbol index of the IQ data of each one of the ingress IQ data streams.

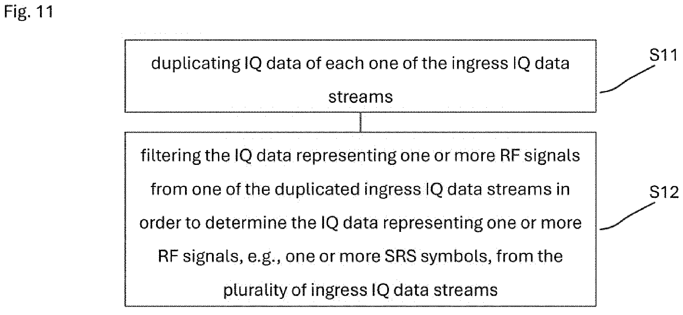

Turning to Figure 11, as before in step S9, now in a step S11 the IQ data of each one of the ingress IQ data streams, e.g. one or more IQ data packets, is duplicated or copied by the fronthaul node. In a step S12, the IQ data representing one or more RF signals is filtered from one of the duplicated ingress IQ data streams in order to determine the IQ data representing one or more RF signals, e.g., one or more SRS symbols, from the plurality of ingress IQ data streams

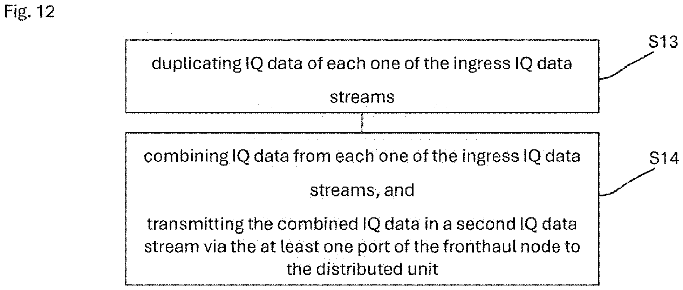

Turning to Figure 12, as before in step S9, now in a step S13, the IQ data of each one of the ingress IQ data streams is duplicated or copied by the fronthaul node. In a step S14, the IQ data from each one of the ingress IQ data streams is combined, and the combined IQ data is transmitted in a second (egress) IQ data stream via the at least one port of the fronthaul node to the distributed unit. This second (egress) data stream may be tagged with a different VLAN tag in order to distinguish it from the first data stream comprising said forked and/or uncombined, i.e. raw, IQ data.

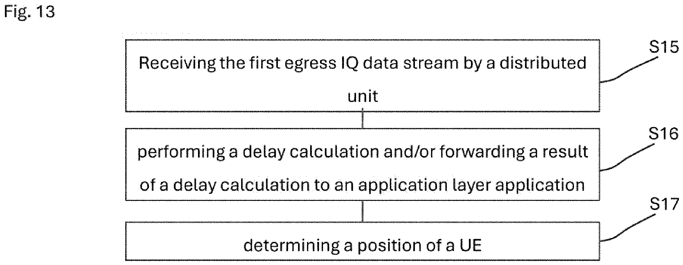

Turning to Figure 13, in a step S15, the first egress IQ data stream is received by a distributed unit. The second data stream may also be received by the distributed unit. In a step S16, a delay calculation may be performed, e.g., at the DU, and/or a result of a delay calculation may be forwarded, e.g., by the DU, to an application layer application, e.g., in a core network of the radio system or a data network (connected to the radio system). In a step S17, a position of a UE may be determined, e.g. by said application layer application, e.g., said OAM application. For example, the geographical coordinates of the UE may be determined. Based on the position of the UE a control action may be triggered, e.g., in order to control an industrial process. Positioning may comprise the geographic position and/or the velocity of the UE-based on measuring radio signals, which by way of the techniques disclosed herein become available even in case of a distributed radio unit scenario, such as for example in a C-RAN architecture. The position information determined may be reported in standard formats, such as those for cell-based or geographical co-ordinates, together with the estimated errors (uncertainty) of the position and velocity of the UE and, if available, the positioning method (or the list of the methods) used to obtain the position estimate.

## Claims

1. A method of packet processing by a fronthaul node (FH), such as a switch, bride, gateway and/or radio aggregation unit, comprising the steps of:
forking, by the fronthaul node (FH), IQ data representing one or more RF signals, e.g., one or more SRS symbols, from a plurality of ingress IQ data streams (I1, I2, I3) received at the fronthaul node (FH).

2. The method according to the preceding claim,
forking by the fronthaul node (FH), the IQ data representing one or more RF signals, e.g., one or more SRS symbols, to a first egress IQ data stream (E1, E2).

3. The method according to the preceding claim,
assigning an identifier (10), e.g., a VLAN tag, to the first egress IQ data stream (E1, E2), the identifier indicating that the first egress IQ data stream (E1, E2) comprises said forked IQ data.

4. The method according to the preceding claim,
receiving via each one of a plurality of ports (P1, P2, P3) of the fronthaul node (FH) a respective ingress IQ data stream (I1, I2, I3) from a respective radio unit (RU#1, RU#2, RU#3).

5. The method according to the preceding claim,
transmitting via at least one port (P4) of the fronthaul node (FH) the first egress IQ data stream (E1, E2) to a distributed unit.

6. The method according to the preceding claim,
duplicating IQ data of each one of the ingress IQ data streams (I1, I2, I3), e.g., only the IQ data of a predetermined RF symbol.

7. The method according to the preceding claim,
forwarding IQ data of each one of the ingress IQ data streams (I1, I2, I3) to the egress IQ data stream (E2) based on a symbol index of the IQ data of each one of the ingress IQ data streams (I1, I2, I3), e.g., for forwarding only the IQ data of a predetermined RF symbol.

8. The method according to the preceding claim,
filtering the IQ data representing one or more RF signals from one of the duplicated ingress IQ data streams (DI1, DI2, DI3) in order to determine the IQ data representing one or more RF signals, e.g., one or more SRS symbols, from the plurality of ingress IQ data streams (I1, I2, I3).

9. The method according to the preceding claim,
combining IQ data from each one of the ingress IQ data streams (I1, I2, I3), and
transmitting the combined IQ data in a second IQ data stream (E1) via the at least one port (P4) of the fronthaul node (FH) to the distributed unit (DU).

10. The method according to the preceding claim,
determining a position of a UE based on the forked IQ data representing one or more RF signals, e.g., one or more SRS symbols, in the first egress IQ data stream (E2).

11. A fronthaul node (FH) operative to perform the method steps of any one of the preceding claims.

12. A distributed unit (DU) operative to process the first egress IQ data stream (E2) according to any one of the preceding claims, and in particular operative to perform a delay calculation and/or forward a result of a delay calculation to an application layer application, e.g., for positioning of a UE, based on the forked IQ data representing one or more RF signals, e.g., one or more SRS symbols, in the first egress IQ data stream (E2).

13. A system (RU, FH, DU) comprising a plurality of radio units (RU#1, RU#2, RU#3), a distributed unit (DU) according to claim 12 and a fronthaul node (FH) according to claim 11 arranged between the distributed unit (DU) and the plurality of radio units (RU#1, RU#2, RU#3).
